# EUROPÄISCHE PATENTSCHRIFT

(11) **EP 3 488 137 B1**
(45) Veröffentlichungstag und Bekanntmachung des Hinweises auf die Patenterteilung: **17.06.2020**
(21) Anmeldenummer: 17748425.0
(22) Anmeldetag: 19.07.2017
(51) Int. Cl.: F16P 3/10

(54) **VERFAHREN ZUM SIGNALISIEREN DER POSITION EINER SICHERHEITSEINRICHTUNG UND SICHERHEITSSCHALTSYSTEM**
METHOD FOR SIGNALING THE POSITION OF A SAFETY DEVICE, AND SAFETY SWITCHING SYSTEM
PROCÉDÉ PERMETTANT DE SIGNALER LA POSITION D'UN SYSTÈME DE SÉCURITÉ ET SYSTÈME D'INTERRUPTEUR DE SÉCURITÉ

(30) Priorität: 29.07.2016 DE 102016114135
(43) Veröffentlichungstag der Anmeldung: 29.05.2019
(73) Patentinhaber: Phoenix Contact GmbH & Co. KG, 32825 Blomberg (DE)
(72) Erfinder: DAVIS, Simon, 32816 Schieder Schwalenberg (DE)
(74) Vertreter: Blumbach · Zinngrebe Patentanwälte PartG mbB
(86) Internationale Anmeldenummer: PCT/EP2017/068281
(87) Internationale Veröffentlichungsnummer: WO 2018/019684

(56) Entgegenhaltungen:
- EP-A2- 0 986 176
- WO-A1-90/13180
- DE-A1-102013 102 108
- DE-B3-102012 107 715

## Beschreibung

Die Erfindung betrifft ein Verfahren zum Signalisieren der Position einer Sicherheitseinrichtung in Bezug auf eine hinsichtlich der Sicherheitseinrichtung zu überwachende Sicherheitszone sowie ein zur Durchführung geeignetes Sicherheitsschaltssystem.

Bekannt sind Sicherheitsschalter zum Überwachen z.B. der Position von Schutzreinrichtungen, die einen Sicherheitsbereich bei Maschinen abtrennen, um beispielsweise in Reaktion auf das Einnehmen einer sicherheitskritischen Position einer solchen trennenden Schutzreinrichtung die Maschine sicher abzuschalten. So müssen in der Regel häufig beim Öffnung oder Entfernen einer Schutzeinrichtung sicherheitskritische Maschinen und/oder Maschinenbewegungen stillgesetzt und das Wiederanlaufen verhindert werden. Die Schutzeinrichtungen dürfen dabei weder zu umgehen noch manipulierbar sein. Bestimmte Applikationen erfordern zusätzlich die Verriegelung einer Schutzeinrichtung bis ein sicherheitskritischer und also gefährlicher (Produktions-) Prozesse beendet ist.

Eine solche Schutzreinrichtung kann beispielsweise eine Tür sein, so dass in Folge beim Öffnen der Tür die Maschine abgeschaltet wird, um einem sicherheitskritischen Zustand sicher zu begegnen und beispielsweise potentiellen Gefahren für einen Menschen sicher vorzubeugen. Sollte im Laufe des Betriebs eine solche Tür im Verhältnis zum Maschinerahmen z.B. "durchhängen" kann der sichere Ansprechbereich des Sicherheitsschalters verlassen werden und die Maschine ungewollt zum Stillstand bringen ohne, dass ein sicherheitskritischer Zustand tatsächlich vorliegt. Wird also die Position einer Schutzreinrichtung als sicherheitskritisch erkannt ohne, dass ein sicherheitskritischer Zustand tatsächlich vorliegt, beeinflusst dies die Produktivität der Maschine und führt zu einer ungeplanten Wartung.

So ist zum Beispiel in WO 90/13180 A1 eine Sicherheitsschaltanordnung beschrieben, die dazu fähig ist, anzuzeigen, ob eine Sicherheitsverkleidung die ein Maschinenteil schützt, korrekt verschlossen wurde. Ferner ist aus der DE 10 2013 102108 A1 ein Sicherheitsschalter bekannt, welcher ein Freigabesignal erzeugt in Abhängigkeit eines Verriegelungszustandes einer beweglichen Schutztür.

Aufgabe der Erfindung ist es, einen Weg aufzuzeigen, mit welchem das Risiko, die Position einer Schutzreinrichtung als sicherheitskritisch zu erkennen ohne, dass ein sicherheitskritischer zustand tatsächlich vorliegt, wesentlich verringert werden kann.

Die Lösung der Aufgabe ist durch ein Verfahren gemäss dem Gegenstand des Anspruchs 1 und ein Sicherheitsschaltsystem gemäß dem Gegenstand des Anspruchs 2 mit den Merkmalen der unabhängigen Ansprüche gegeben. Zweckmäßige Ausgestaltungen und Weiterbildungen sind Gegenstand der abhängigen Ansprüche.

Die Erfindung schlägt folglich ein Verfahren zum Signalisieren der Position einer Sicherheitseinrichtung in Bezug auf eine hinsichtlich der Sicherheitseinrichtung zu überwachende Sicherheitszone vor, wobei zur Überwachung der Sicherheitszone die Position der Sicherheitseinrichtung in Bezug auf die Sicherheitszone mit einer Detektionseinrichtung überwacht wird und die Sicherheitszone in eine erste Teilzone und wenigstens eine zweite Teilzone untergliedert wird, und wobei unter Ansprechen auf eine detektierte Position der Sicherheitseinrichtung innerhalb der ersten Teilzone, dies als erster Zustand erkannt wird, unter Ansprechen auf das Detektieren der Sicherheitseinrichtung im Bereich einer zweiten Teilzone, dies als zweiter Zustand erkannt wird und es als dritter Zustand erkannt wird, wenn weder innerhalb der ersten Teilzone noch im Bereich wenigstens einer zweiten Teilzone die Sicherheitseinrichtung detektiert wird. Anschließend wird das Erkennen des dritten Zustands durch ein sicherheitsgerichtetes Auslösesignal zum Auslösen einer vorbestimmten sicherheitsgerichteten Reaktion signalisiert, und/oder
das Erkennen des ersten und/oder zweiten Zustandes durch ein Informationssignal mit den jeweiligen Zustand betreffenden Daten an eine, insbesondere in drahtloser Verbindung stehende Anzeigeeinrichtung signalisiert.

Insbesondere zur praktischen Umsetzung des Verfahrens gemäß der Erfindung, schlägt die Erfindung ferner ein Sicherheitsschaltsystem mit einem Sicherheitsschalter, welcher eine Sicherheitseinrichtung und eine Detektionseinrichtung besitzt, vor, wobei die Detektionseinrichtung eingerichtet ist, die Position der Sicherheitseinrichtung innerhalb einer in eine erste Teilzone und wenigstens eine zweite Teilzone untergliederten Sicherheitszone zu überwachen. Der Sicherheitsschalter ist eingerichtet,
in Abhängigkeit der Position der Sicherheitseinrichtung in Bezug auf die Sicherheitszone wenigstens drei Zustände zu erkennen, wobei unter Ansprechen auf das Detektieren der Position der Sicherheitseinrichtung innerhalb der ersten Teilzone, dies als erster Zustand erkennbar ist, unter Ansprechen auf das Detektieren der Position der Sicherheitseinrichtung im Bereich einer zweiten Teilzone, dies als zweiter Zustand erkennbar ist und es als dritter Zustand erkennbar ist, wenn die Sicherheitseinrichtung weder innerhalb der ersten noch im Bereich der zweiten Teilzone zu detektieren ist. Der Sicherheitsschalter ist ferner eingerichtet, dass das Erkennen des dritten Zustands durch ein sicherheitsgerichtetes Auslösesignal zum Auslösen einer vorbestimmten sicherheitsgerichteten Reaktion signalisierbar ist, und/oder, dass das Erkennen des ersten und/oder zweiten Zustandes durch ein Informationssignal mit den jeweiligen Zustand betreffenden Daten an eine, insbesondere in drahtloser Verbindung stehende Anzeigeeinrichtung signalisierbar ist.

Ein wesentlicher Vorteil der Erfindung ist somit darin zu sehen, dass aufgrund der unterschiedlichen, insbesondere voreingestellten Teilzonen einer zu überwachenden Sicherheitszone, ein Übergangsbereich nutzbar ist bzw. zur Verfügung gestellt wird, unter Verwendung welchem, anstelle eines bisher, quasi binären Umschaltens zwischen zwei Zuständen, d.h. insbesondere zwischen einem sicherheitsunkritischem und einem sicherheitskritischen Zustand, ein Übergangszustand nutzbar ist, mit welchem also insbesondere ein einer sicherheitsrelevanten Vorschrift zwar nicht genügender Zustand aber dennoch noch als sicherheitsunkritisch einstufbarer Zustand von einem per se sicherheitsunkritischen Zustand und einem per se sicherheitskritischen Zustand unterschieden und entsprechend auch, insbesondere Anwendungsbedingt, unterschiedlich sicherheitsgerichtet signalisiert werden kann.

Wird unter Nutzung des erfindungsgemäßen Gegenstandes beispielsweise eine einen Sicherheitsbereich bei Maschinen abtrennende Schutzreinrichtung überwacht, wie beispielsweise eine Tür, an welcher die Sicherheitseinrichtung angebracht ist, so kann z.B. mittels dieses Übergangsbereiches das Durchhängen einer solchen Tür im Verhältnis zum Maschinerahmen im Laufe des Betriebs als solches erkannt werden, obwohl ein "erster" sicherer Ansprech- oder Detektionsbereich des Sicherheitsschalters, d.h. innerhalb der ersten Teilzone, bereits zumindest teilweise verlassen ist und die Maschine folglich nicht ungewollt zum Stillstand bringen ohne, dass ein sicherheitskritischer Zustand tatsächlich vorliegt.

Weitere Vorteile und Merkmale der Erfindung ergeben sich aus der nachfolgenden Beschreibung von bevorzugten Ausführungsbeispielen anhand der beigefügten Zeichnung, in welcher
Fig. 1 eine stark abstrahierte Skizze einer bevorzugten Ausführungsform eines Sicherheitsschaltsystems nach der Erfindung, und
Fig. 2 ein stark vereinfachtes Flussdiagram betreffend einen beispielhaften, möglichen und bevorzugten Ablauf eines Verfahrens nach der Erfindung zeigen.

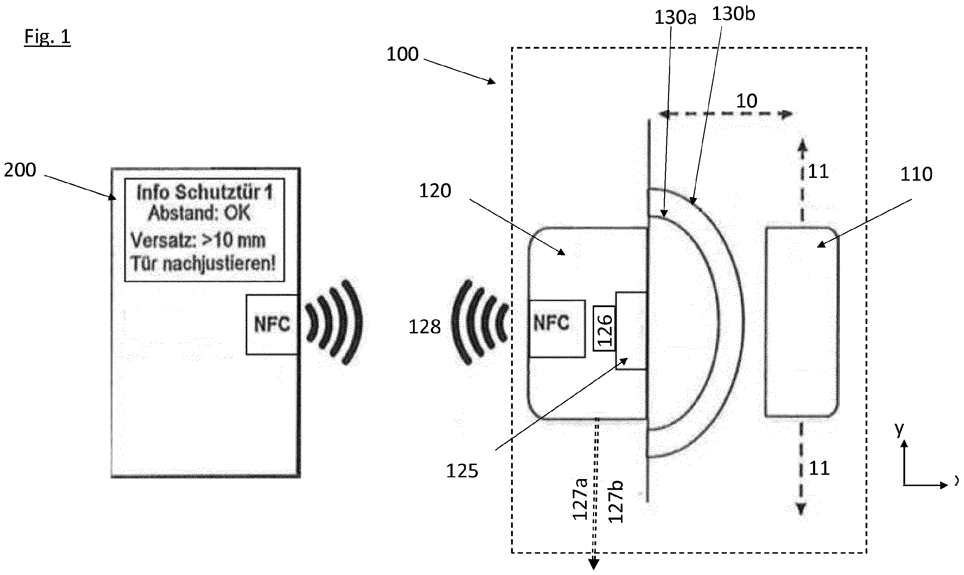

Eine bevorzugte Ausführungsform eines Sicherheitsschaltsystems, wie z.B. bei Fig. 1 stark abstrahiert dargestellt, beinhaltet einen Sicherheitsschalter 100, welcher eine Sicherheitseinrichtung 110 und eine Detektionseinrichtung 120 besitzt.

Die Detektionseinrichtung 120 ist eingerichtet, die Position der Sicherheitseinrichtung 110 in Bezug auf eine Sicherheitszone 130a, 130b zu überwachen und also insbesondere innerhalb eines maximalen Ansprech- oder Detektionsbereich der Detektionseinrichtung 120 auch zu detektieren.

Detektionseinrichtungen, die zu Positionsüberwachung ausgebildet sind, sind dem Fachmann an und für sich bekannt und können z.B. nach einem optischen, kapazitiven, induktiven und/oder magnetischen Messprinzip arbeiten. Die Wahl der speziellen Detektionseinrichtung kann hierbei häufig von dem Material des zu detektierenden Objekts und/oder der speziellen Anwendung abhängen. Ferner kann je nach Art der Detektionseinrichtung 120 ein (maximal) möglicher, überwachbarer Ansprechbereich vorgegeben sein oder auch einstellbar sein, innerhalb welchem eine Positionsüberwachung durchführbar ist. Die Sicherheitszone 130a, 130b, in Bezug auf welche die Position der Sicherheitseinrichtung 110 zu detektieren sein soll, liegt folglich innerhalb eines solchen Ansprechbereichs oder entspricht diesem. Ein solcher Ansprechbereich ist bei Fig. 1 beispielhaft durch die Pfeile 10 und 11 in einer 2-dimensionalen X-Y-Ebene wiedergegeben, wobei der Pfeil 10 einen maximalen Abstand in X-Richtung zu einer Signalempfangseinheit 125 der Detektionseinrichtung 120 und die Pfeile 11 einen maximalen Versatz in Y-Richtung zu der Empfangseinheit 125 der Detektionseinrichtung 120 repräsentieren. Der Ansprechbereich kann sich darüber hinaus auch entlang einer dritten Dimension erstrecken.

Die bei Fig. 1 vom Sicherheitsschalter 100 umfasste Detektionseinrichtung 120 arbeitet z.B. bevorzugt mit Hallsensoren, so dass also ein in der Signalempfangseinheit 125 untergebrachtes, stromdurchflossenes Halbleiter-Element, welches durch ein Magnetfeld von einem dahinter, jedoch bei Fig. 1 aus Übersichtlichkeitsgründen nicht näher sichtbaren, fest eingebauten Permanentmagneten ständig magnetisch vorgespannt ist. Wenn nun die, in diesem Fall ferromagnetisches Material aufweisende Sicherheitseinrichtung 110 in dieses Magnetfeld eindringt, wird dessen Feldstärke beeinflusst, wodurch eine Änderung der Spannung im Halbleiterelement festgestellt werden kann. Das daraus entstandene, in der Regel Sinus-förmig verlaufende Spannungssignal kann dann zweckmäßig von einer weiterhin in der Signalempfangseinheit 125 umfassten oder mit dieser gekoppelten internen Elektronik 126 z.B. in ein Rechtecksignal umgewandelt und verstärkt werden. Nach dem aktuellen Stand der Technik sind Sicherheitsschalter, die eine Detektionseinrichtung 120 mit z.B. Hallsensoren beinhalten, in der Lage, einen Ansprechbereich zu erfassen bzw. zu überwachen, der sich aus einem maximalen Abstand 10 zwischen der Detektionseinrichtung 120, insbesondere der Empfangseinheit 125, und der Sicherheitseinrichtung 110, welche somit als Schaltelemente des Sicherheitsschalters fungierenden, sowie einem maximalen Versatz 11 beidseitig der Sicherheitseinrichtung 110 in y-Richtung ergibt, die jeweils typischerweise im Bereich von 10 bis 15 Millimeter liegen. Die sich einstellenden Änderungen in der Spannung aufgrund einer Positionsverschiebung der Sicherheitseinrichtung 110 können zweckmäßig mittels der internen Elektronik 126 Positionen innerhalb des Ansprechbereichs zugeordnet werden, beispielsweise mit Hilfe eines zuvor durchgeführten Teach-In-Verfahrens.

Bei dem gemäß Fig. 1 skizzierten Sicherheitsschaltsystem ist nun erfindungsgemäß vorgesehen, die Sicherheitszone 130a und 130b, in Bezug auf welche die Position der Sicherheitseinrichtung 110 zu detektieren ist, in eine erste Teilzone 130a und wenigstens eine zweite Teilzone 130b zu untergliedern. Dies kann z.B. mittels der zuvor erwähnten Zuordnung zwischen Positionen und sich einstellenden Signaländerungen, insbesondere Spannungsänderungen, erfolgen.

Ferner ist der Sicherheitsschalter 100 eingerichtet, in Abhängigkeit der Position der Sicherheitseinrichtung 110 in Bezug auf die Sicherheitszone 130a, 130b wenigstens drei Zustände zu erkennen. Dies kann zweckmäßig mittels der zuvor erwähnten internen Elektronik 126 erfolgen.

Im Rahmen der Erfindung ist hierbei vorgesehen, das Ansprechen auf das Detektieren der Position der Sicherheitseinrichtung 110 innerhalb der ersten Teilzone 130a als ersten Zustand zu erkennen, das Ansprechen auf das Detektieren der Position der Sicherheitseinrichtung im Bereich einer zweiten Teilzone 130b als zweiten Zustand zu erkennen und als dritten Zustand zu erkennen, wenn die Sicherheitseinrichtung 110 weder innerhalb der ersten Teilzone 130a noch im Bereich der zweiten Teilzone 130b zu detektieren ist.

Zweckmäßig ist die Untergliederung der Sicherheitszone in eine erste Teilzone 130a und wenigstens eine zweite Teilzone 130b daher derart vorbestimmt, eingestellt oder anderweitig eingerichtet, dass die erste Teilzone 130a eine Teilzone bildet, innerhalb welcher sich die Sicherheitseinrichtung 110 bei einem minimalen Abstand und Versatz zur Detektionseinrichtung 120 befindet, z.B. innerhalb eines Abstandes und/oder Versatzes, jeweils bis 10 mm. Die wenigstens eine zweite Teilzone 130b bildet dann jeweils eine Teilzone aus, im Bereich welcher sich die Sicherheitseinrichtung 110 bei einem größeren jedoch noch als zulässig einstufbaren Abstand und/oder Versatz zur Detektionseinrichtung 120 befindet, z.B. innerhalb eines Abstandes und/oder Versatzes jeweils größer 10 mm und bis 15 mm. Ist die Sicherheitseinrichtung 110 weder innerhalb der ersten Teilzone 130a noch im Bereich der wenigstens einen zweiten Teilzone 130b zu detektieren, befindet sich die Sicherheitseinrichtung 110 folglich in einem nicht mehr zulässigen und also sicherheitskritischen, noch darüber hinaus gehenden Abstand und/oder Versatz zur Detektionseinrichtung 120, welches anwendungsbedingt noch innerhalb des maximalen Ansprechbereichs oder bereits außerhalb des maximalen Ansprechbereichs sein kann.

Der Sicherheitsschalter 100, insbesondere die interne Elektronik 126, ist ferner eingerichtet, dass das Erkennen des dritten Zustands durch ein sicherheitsgerichtetes Auslösesignal 127a zum Auslösen einer vorbestimmten sicherheitsgerichteten Reaktion signalisierbar ist, insbesondere auch signalisiert wird, und/oder, dass das Erkennen des ersten und/oder zweiten Zustandes durch ein Informationssignal 128 mit den jeweiligen Zustand betreffenden Daten an eine in insbesondere drahtloser Verbindung stehende Anzeigeeinrichtung 200 signalisierbar ist, insbesondere auch signalisiert wird.

Der Sicherheitsschalter 100 kann zum Auslösen einer sicherheitsgerichteten Reaktion infolge des Signalisierens des Erkennens des dritten Zustands durch ein sicherheitsgerichtetes Auslösesignal 127a zweckmäßig mit einer in den Zeichnungen aus Übersichtlichkeitsgründen nicht dargestellten sicherheitsgerichteten Reaktionseinrichtung gekoppelt sein, welche z.B. eine Maschine abschaltet, um einem sicherheitskritischen Zustand sicher zu begegnen und beispielsweise potentiellen Gefahren für einen Menschen sicher vorzubeugen. Die Sicherheitseinrichtung 110 kann demnach beispielsweise an einer einen Sicherheitsbereich bei Maschinen abtrennenden Schutzreinrichtung, wie beispielsweise einer Tür angebracht sein. Die Sicherheitseinrichtung 110 würde sich folglich beim Öffnen der Tür aus der Sicherheitszone 130a, 130b herausbewegen und somit weder innerhalb der ersten Teilzone 130a noch im Bereich der zweiten Teilzone 130b zu detektierbar sein.

Der Sicherheitsschalter 100 kann ferner in Bezug auf das Erkennen des ersten Zustandes z.B. derart eingerichtet sein, dass dieser einem sicherheitsunkritischen Zustand entspricht, welcher entsprechend durch das Informationssignal 128 mit einen sicherheitsunkritischen Zustand betreffenden Daten signalisierbar ist. Im obigen Beispielsfall einer, an einer einen Sicherheitsbereich bei Maschinen abtrennenden Schutzreinrichtung angebrachten Sicherheitseinrichtung 110 könnte demnach signalisiert werden, dass die Schutzreinrichtung, wie beispielsweise eine Tür, korrekt geschlossen ist.

Der Sicherheitsschalter 100 kann ferner in Bezug auf das Erkennen des zweiten Zustandes z.B. derart eingerichtet sein, dass dieser einen Zustand darstellt, welcher zwar einer sicherheitsrelevanten Vorschrift nicht oder nicht vollständig genügt, aber dennoch noch als sicherheitsunkritisch einstufbar ist, und welcher entsprechend durch das Informationssignal 128 mit einen diesen Zustand betreffenden Daten signalisierbar ist. Im obigen Beispielsfall einer, an einer einen Sicherheitsbereich bei Maschinen abtrennenden Schutzreinrichtung angebrachten Sicherheitseinrichtung 110 könnte demnach signalisiert werden, dass die Schutzreinrichtung, wie beispielsweise eine Tür, zwar nicht mehr vorschriftsgemäß geschlossen ist, aber dennoch als geschlossen einzustufbar ist, z.B. aufgrund eines Durchhängens der Schutzeinrichtung im Verhältnis eines die Schutzreinrichtung aufnehmenden Rahmens oder eines Verzugs einer Aufhängung der Schutzeinrichtung.

Bei Fig. 1 ist, auch wenn die Sicherungseinrichtung 110 gemäß Darstellung sich weder innerhalb der ersten Teilzone 130a noch im Bereich der zweiten Teilzone 130b befindet und folglich auch in keiner dieser Teilzonen mehr detektierbar ist, dennoch beispielhaft ein mögliches, an der Anzeigeeinrichtung 200 angezeigtes Informationssignal 128 mit, den zweiten Zustand betreffenden Daten dargestellt. Je nach Ausführung können selbstverständlich auch andere Informationen in Bezug auf einen zweiten Zustand signalisiert und/oder angezeigt werden, z.B. lediglich, dass sich die Sicherungseinrichtung in einem Grenzbereich befindet.

Insbesondere unter Ansprechen auf das Erkennen des ersten und/oder zweiten Zustandes kann der Sicherheitsschalter 100 im Rahmen der Erfindung ergänzend oder alternativ auch zum Bewirken einer Freigabe eines sicherheitskritischen Prozesses wenigstens ein Freigabesignal 127b generieren. Der Sicherheitsschalter 100 kann ferner in einer bevorzugten Ausführung mit der zuvor erwähnten sicherheitsgerichteten Reaktionseinrichtung auch zur Signalisierung eines solchen Freigabe 127b entsprechend gekoppelt sein oder mit einer separaten, gleichermaßen aus Übersichtlichkeitsgründen in der Figur nicht dargestellten Freigabeeinrichtung gekoppelt sein.

Die Sicherheitseinrichtung 100 fungiert somit quasi als eine Art "Betätiger", wobei z.B. ein Sicherheitsausgang der Detektionseinrichtung beispielsweise auf einen Signalpegel LOW schaltet und dies als Auslösesignal zum Abschalten einer Maschine entsprechend signalisier werden kann, wenn der "Betätiger" sich nicht Bereich der Sicherheitszone befindet. Befindet sich die als "Betätiger" fungierende Sicherheitseinrichtung 100 innerhalb der ersten Teilzone oder zumindest im Bereich der zweiten Teilzone, schaltet der Sicherheitsausgang der Detektionseinrichtung beispielsweise auf einen Signalpegel HIGH, welches gegebenenfalls als Freigabesignal zum Anlaufen oder Weiterlaufen der Maschine entsprechend signalisiert werden kann.

Insbesondere unter Ansprechen auf das Erkennen des dritten Zustandes kann der Sicherheitsschalter 100 im Rahmen der Erfindung ergänzend oder alternativ auch eingerichtet sein, diesen durch ein Informationssignal 128 mit, den dritten Zustand betreffenden Daten an eine, insbesondere in drahtloser Verbindung stehende Anzeigeeinrichtung 200 zu signalisieren.

In einer, wie bei Figur 1 skizzierten Ausführungsform, besitzen der Sicherheitsschalter 100 und die mit diesem in Verbindung stehende, im dargestellten Beispiel in drahtloser Verbindung stehende Anzeigeeinrichtung 200 jeweils eine NFC-Sende/Empfangseinheit, insbesondere einen NFC-Chipsatz und eine NFC-Antenne, wobei NFC bekanntermaßen für "Near Field Communication" (Nahfeldkommunikation) steht. Ein an die Anzeigeeinrichtung 200 signalisierbares Informationssignal 128 mit, den jeweiligen Zustand betreffenden Daten kann dann z.B. auch direkt am bzw. in nächster Nähe zum Sicherheitsschalter an ein Handgerät oder Smartphone als Anzeigegerät 200 übersandt oder von diesem ausgelesen werden und dort angezeigt werden.

Die Signalisierung 128 des Informationssignals mit, den jeweiligen Zustand betreffenden Daten von dem Sicherheitsschalter 100 an die in Verbindung stehende Anzeigeeinrichtung 200 kann hierbei je nach spezifischer Ausgestaltung somit durch aktives Senden oder durch ein Auslesen erfolgen.

Informationen über einen aktuellen Schaltabstand und Versatz der Sicherheitseinrichtung 110 zur Detektionseinrichtung 120 über ein Handgerät oder Smartphone direkt am bzw. in nächster Nähe zum Sicherheitsschalter herauszulesen oder zu empfangen und daraufhin entsprechend anzuzeigen, kann es beispielsweise einem Maschinenbediener oder Wartungspersonal ermöglichen, auf einfachste Art und Weise Rückschlüsse über die aktuelle Position einer Schutzeinrichtung, an welcher die Sicherheitseinrichtung angeordnet ist, zu ziehen und gegebenenfalls vorbeugende Korrekturen einzuleiten.

Gemäß zweckmäßiger Weiterbildung ist der Sicherheitsschalter 100 des erfindungsgemäßen Sicherheitsschaltsystems ferner eingerichtet, das zwischen Sicherheitsschalter 100 und Anzeigeeinrichtung 200 übertragbare Informationssignal 128 in vorbestimmten Zeitabständen zu aktualisieren.

Insbesondere für diesen Fall ist die Anzeigeeinrichtung 200 vorteilhafterweise eingerichtet, ein zu einem ersten Zeitpunkt aktualisiertes Informationssignal 128 mit einem zu einem nachfolgenden zweiten Zeitpunkt aktualisiertes Informationssignal zu vergleichen und ein Ergebnis des Vergleichs anzuzeigen. Hierdurch kann frühzeitig eine Veränderung, insbesondere eine Positionsveränderung von einem Zustand in Richtung eines anderen Zustandes, insbesondere in Richtung eines sicherheitskritischen Zustandes, erkannt und in Folge gegebenenfalls auch entsprechend reagiert werden.

Ferner besitzt der Sicherheitsschalter 100, insbesondere für eine eindeutige Zuordnung der auf dem Anzeigegerät 200 angezeigten Informationen, bevorzugt eine Codierung, insbesondere in Art einer Gerätekennung und/oder insbesondere eine RFID-Codierung (RFID steht für radio-frequency identification bzw. Identifizierung mittels elektromagnetischer Wellen), und ist darüber hinaus eingerichtet, dass diese Codierung zusammen mit dem Informationssignal 128 zwischen dem Sicherheitsschalter und der Anzeigeeinrichtung 200 übertragbar ist. Auch kann eine solche Codierung einen hohen Manipulationsschutz bieten. So können insbesondere bei Einsatz einer Vielzahl von Sicherheitsschaltern 100 jegliche Positionsveränderungen, beabsichtigter oder unbeabsichtigter Art, umgehend und eindeutig lokalisiert und zugeordnet werden.

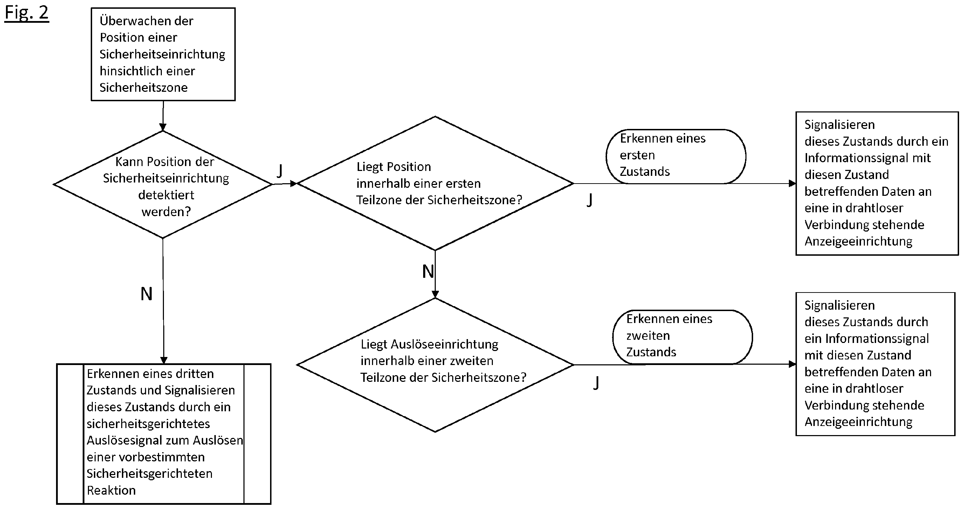

Fig. 2 zeigt ein stark vereinfachtes Flussdiagram betreffend einen beispielhaft möglichen, bevorzugten Ablauf eines Verfahrens nach der Erfindung, basierend auf welchem also die Position einer Sicherheitseinrichtung in Bezug auf eine hinsichtlich der Sicherheitseinrichtung zu überwachende Sicherheitszone signalisiert werden kann, insbesondere basierend auf einem zuvor beschriebenen Sicherheitsschaltsystem nach der Erfindung.

Im Einzelnen wird hierzu unter Bezugnahme auf Fig. 2 die Position einer Sicherheitseinrichtung in Bezug auf die Sicherheitszone überwacht, welches insbesondere mittels einer zuvor beschriebenen Detektionseinrichtung erfolgt, wobei die Wahl der speziellen Detektionseinrichtung hierbei häufig von dem Material des zu detektierenden Objekts und/oder der speziellen Anwendung abhängen kann.

Ist die Detektionseinrichtung also grundsätzlich eingerichtet, die Position der Sicherheitseinrichtung innerhalb eines vorgegebenen Ansprechbereichs der Detektionseinrichtung, welcher im Rahmen der Erfindung die zu überwachende Sicherheitszone beinhaltet oder dieser entspricht, detektieren zu können, zumindest soweit die Sicherheitseinrichtung sich innerhalb oder zumindest im Bereich der Sicherheitszone befindet, werden während der Überwachung insbesondere drei Fälle unterschieden.

Kann eine Position der Sicherheitseinrichtung hinsichtlich der Sicherheitszone detektiert werden, wird unter Ansprechen auf eine detektierte Position der Sicherheitseinrichtung innerhalb einer ersten Teilzone als erster Zustand erkannt und unter Ansprechen auf das Detektieren der Sicherheitseinrichtung im Bereich einer zweiten Teilzone als zweiter Zustand erkannt.

Kann eine Position der Sicherheitseinrichtung hinsichtlich der Sicherheitszone nicht detektiert werden, d.h. die Sicherheitseinrichtung weder wird innerhalb der ersten Teilzone noch im Bereich wenigstens einer zweiten Teilzone detektiert, wird dies als dritter Zustand erkannt.

Je nach spezifischer Ausbildung wird daraufhin im Falle des Erkennens des dritten Zustands dies durch ein sicherheitsgerichtetes Auslösesignal zum Auslösen einer vorbestimmten sicherheitsgerichteten Reaktion signalisiert und/oder
es wird im Falle des Erkennens des ersten und/oder zweiten Zustandes dies durch ein Informationssignal mit den jeweiligen Zustand betreffenden Daten an eine, insbesondere in drahtloser Verbindung stehende Anzeigeeinrichtung signalisiert.

Die Signalisierung des Informationssignals mit, den jeweiligen Zustand betreffenden Daten von dem Sicherheitsschalter an die in Verbindung stehende Anzeigeeinrichtung kann hierbei je nach spezifischer Ausgestaltung durch aktives Senden oder durch ein auslesen erfolgen.

Die Untergliederung der Sicherheitszone in die erste Teilzone und die wenigstens eine zweite Teilzone, kann z.B. basierend auf dem jeweiligen, empfangenen Detektionssignal erfolgen.

Aus obiger Beschreibung ist für einen Fachmann ersichtlich, dass insbesondere die Informationen betreffend den ersten und/oder zweiten Zustand in vorteilhafter Weise benutzt werden können, um dem Anwender Hinweise über die Position einer Schutzreinrichtung, z.B. einer Tür, an welcher die Sicherungseinrichtung angebracht ist, zu geben. Die Informationen wären somit zweckmäßig auch beim Einrichten einer Maschine in einer Fabrik sowie im laufenden Betrieb dienlich und vom hohen Nutzen. Der Gegenstand der Erfindung kann somit wesentlich zu einer höheren Produktivität sowie reduzierten Stillstandszeiten der Maschine beitragen.

Zusammenfassend ist der Sicherheitsschalter 100 im Rahmen der Erfindung, und insbesondere die Detektionseinrichtung 120, somit eingerichtet, das Vorhandensein der Sicherheitseinrichtung 120 innerhalb wenigstens zweier voreingestellter Detektionsansprechbereiche zu detektieren, und wobei der Sicherheitsschalter eingerichtet ist, wenigstens drei Zustände einzunehmen bzw. zu signalisieren. Einen ersten Zustand unter Ansprechen auf das Detektieren der Sicherheitseinrichtung 120 innerhalb eines ersten voreingestellten Detektionsansprechbereichs, einen zweiten Zustand unter Ansprechen auf das Detektieren der Sicherheitseinrichtung 120 im Bereich wenigstens eines zweiten voreingestellten Detektionsansprechbereichs und einen dritten Zustand, wenn die Sicherheitseinrichtung 120 mittels der Detektionseinrichtung 120 weder innerhalb des ersten noch des wenigstens eines zweiten voreingestellten Detektionsansprechbereichs zu detektieren ist.

Derzeit verfügbare berührungslose codierte Sicherheitsschalter für die sichere Überwachung der Position von trennenden Schutzeinrichtungen in Maschinen können folglich mittels des Gegenstandes nach der Erfindung wesentlich optimiert werden.

### Bezugszeichenliste

- 100: Sicherheitsschalter,
- 110: Sicherheitseinrichtung,
- 120: Detektionseinrichtung,
- 130a, 130b: Teilzonen einer Sicherheitszone,
- 125: Signalempfangseinheit,
- 126: internen Elektronik,
- 127a: Auslösesignal 127a,
- 12b: Freigabesignal,
- 128: Informationssignal,
- 200: Anzeigeeinrichtung,
- 10: Abstand,
- 11: Versatz.

## Patentansprüche

1. Verfahren zum Signalisieren der Position einer Sicherheitseinrichtung (110) in Bezug auf eine hinsichtlich der Sicherheitseinrichtung (110) zu überwachende Sicherheitszone (130a, 130b), **dadurch gekennzeichnet, dass**
zur Überwachung der Sicherheitszone (130a, 130b) die Position der Sicherheitseinrichtung in Bezug auf die Sicherheitszone mit einer Detektionseinrichtung (120) detektiert wird und die Sicherheitszone in eine erste Teilzone (130a), innerhalb welcher sich die Sicherheitseinrichtung (110) bei einem minimalen Abstand und Versatz zur Detektionseinrichtung (120) befindet, und wenigstens eine zweite Teilzone (130b), im Bereich welcher sich die Sicherheitseinrichtung (110) bei einem größeren jedoch noch als zulässig einstufbaren Abstand und/oder Versatz zur Detektionseinrichtung (120) befindet, untergliedert wird, sowie,
- dass unter Ansprechen auf eine detektierte Position der Sicherheitseinrichtung (110) innerhalb der ersten Teilzone (130a), dies als erster, sicherheitsunkritischer Zustand erkannt wird, unter Ansprechen auf das Detektieren der Sicherheitseinrichtung (110) im Bereich einer zweiten Teilzone (130b), dies als zweiter, sicherheitsunkritisch einstufbarer Zustand erkannt wird und es als dritter, sicherheitskritischer Zustand erkannt wird, wenn weder innerhalb der ersten Teilzone (130a) noch im Bereich wenigstens der zweiten Teilzone (130b) die Sicherheitseinrichtung (110) detektiert wird, und dadurch, dass
das Erkennen des dritten Zustands durch ein sicherheitsgerichtetes Auslösesignal (127a) zum Auslösen einer vorbestimmten sicherheitsgerichteten Reaktion signalisiert wird, und/oder
das Erkennen des ersten und/oder zweiten Zustandes durch ein Informationssignal (128) mit den jeweiligen Zustand betreffenden Daten an eine, insbesondere in drahtloser Verbindung stehende Anzeigeeinrichtung signalisiert wird.

2. Sicherheitsschaltsystem mit einem Sicherheitsschalter (100), welcher eine Sicherheitseinrichtung (110) und eine Detektionseinrichtung (120) besitzt, insbesondere zur Durchführung des Verfahrens nach Anspruch 1,
- wobei die Detektionseinrichtung (120) eingerichtet ist, die Position der Sicherheitseinrichtung (110) innerhalb einer in eine erste Teilzone (130a) innerhalb welcher sich die Sicherheitseinrichtung (110) bei einem minimalen Abstand und Versatz zur Detektionseinrichtung (120) befindet, und wenigstens eine zweite Teilzone (130b), im Bereich welcher sich die Sicherheitseinrichtung (110) bei einem größeren jedoch noch als zulässig einstufbaren Abstand und/oder Versatz zur Detektionseinrichtung (120) befindet, untergliederten Sicherheitszone zu detektieren, und
- wobei der Sicherheitsschalter (100) eingerichtet ist, in Abhängigkeit der Position der Sicherheitseinrichtung (110) in Bezug auf die Sicherheitszone wenigstens drei Zustände zu erkennen, wobei unter Ansprechen auf das Detektieren der Position der Sicherheitseinrichtung innerhalb der ersten Teilzone (130a), dies als erster, sicherheitsunkritischer Zustand erkennbar ist, unter Ansprechen auf das Detektieren der Position der Sicherheitseinrichtung (130b) im Bereich der zweiten Teilzone (130b), dies als zweiter, sicherheitsunkritisch einstufbarer Zustand erkennbar ist und es als dritter, sicherheitskritischer Zustand erkennbar ist, wenn die Sicherheitseinrichtung (110) weder innerhalb der ersten noch im Bereich der zweiten Teilzone (130a, 130b) zu detektieren ist, und wobei
das Erkennen des dritten Zustands durch ein sicherheitsgerichtetes Auslösesignal (127a) zum Auslösen einer vorbestimmten sicherheitsgerichteten Reaktion signalisierbar ist, und/oder
das Erkennen des ersten und/oder zweiten Zustandes durch ein Informationssignal (128) mit den jeweiligen Zustand betreffenden Daten an eine, insbesondere in drahtloser Verbindung stehende Anzeigeeinrichtung signalisierbar ist.

3. Sicherheitsschaltsystem nach Anspruch 2, wobei der Sicherheitsschalter (100) eine Codierung besitzt und eingerichtet ist, dass diese Codierung zusammen mit dem Informationssignal zwischen dem Sicherheitsschalter und der Anzeigeeinrichtung drahtlos übertragbar ist.

4. Sicherheitsschaltsystem nach einem der vorstehenden Ansprüche 2 oder 3, wobei der Sicherheitsschalter und die Anzeigeeinrichtung jeweils eine NFC-Sende/Empfangseinheit besitzen.

5. Sicherheitsschaltsystem nach einem der vorstehenden Ansprüche 2 bis 4, wobei der Sicherheitsschalter eingerichtet ist, das zwischen Sicherheitsschalter und Anzeigeeinrichtung übertragbare Informationssignal in vorbestimmten Zeitabständen zu aktualisieren.

6. Sicherheitsschaltsystem nach Anspruch 5, wobei die Anzeigeeinrichtung eingerichtet ist, ein zu einem ersten Zeitpunkt aktualisiertes Informationssignal mit einem zu einem nachfolgenden zweiten Zeitpunkt aktualisierte Informationssignal zu vergleichen und ein Ergebnis dieses Vergleichs anzuzeigen.

7. Sicherheitsschaltsystem nach einem der vorstehenden Ansprüche 2 bis 6, wobei der Sicherheitsschalter zum Auslösen einer sicherheitsgerichteten Reaktion mit einer sicherheitsgerichteten Reaktionseinrichtung gekoppelt ist und/oder ausgebildet ist, zum Bewirken einer Freigabe eines sicherheitskritischen Prozesses unter Ansprechen auf den ersten und/oder den zweiten Zustand wenigstens ein Freigabesignal zu generieren.

## Claims

1. A method for signaling the position of a safety device (110) with respect to a safety zone (130a, 130b) to be monitored with regard to the safety device (110), **characterized in that**
for monitoring the safety zone (130a, 130b), the position of the safety device is detected with a detection device (120), and the safety zone is divided into a first subzone (130a), within which the safety device (110) is at a minimum distance and offset from the detection device (120), and at least one second subzone (130b), within the range of which the safety device (110) is at a distance and/or offset from the detection device (120) that is greater but can still be classified as allowed, as well as
- in response to a detected position of the safety device (110) within the first subzone (130a), this is recognized as a first non-safety-critical condition, in response to detection of the safety device (110) in the area of a second subzone (130b), this is recognized as a second non-safety-critical classifiable condition, and a third safety-critical condition is recognized when the safety device (100) is not detected either within the first subzone (130a) or in the area of at least the second subzone (130b), and **in that**
recognition of the third condition is signaled by a safety-oriented deployment signal (127a) for deployment of a predetermined safety-oriented response and/or recognition of the first and/or second condition(s) is signaled by an information signal (128) with data pertaining to the respective condition to a display device, in particular in wireless connection.

2. A safety switch system having a safety switch (100), which has a safety device (110) and a detection device (120), in particular for carrying out the method according to claim 1,
- wherein the detection device (120) is equipped to detect the position of the safety device (110) within a safety zone which is divided into one first subzone (130a), within which the safety device (110) is at a minimum distance and offset from the detection device (120), and at least one second subzone (130b), within the range of which the safety device (110) is at a distance and/or offset from the detection device (120) that is greater but can still be classified as allowed, and
- wherein the safety switch (100) is equipped to recognize at least three conditions as a function of the position of the safety device (110) with respect to the safety zone, wherein in response to detection of the position of the safety device within the first subzone (130a), this can be recognized as a first non-safety-critical condition, in response to detection of the position of the safety device (130b) in the area of the second subzone (130b), this can be recognized as a second non-safety-critical classifiable condition, and it can be recognized as a third safety-critical condition if the safety device (110) cannot be detected either within the first subzone or in the area of the second subzone (130a, 130b), and wherein the recognition of the third condition can be signaled by a safety-oriented deployment signal (127a) for deployment of the predetermined safety-oriented response and/or
recognition of the first and/or second condition(s) can be signaled by an information signal (128) with data pertaining to the respective condition to a display device in wireless connection in particular.

3. The safety switch system according to claim 2 wherein the safety switch (100) has coding and is equipped so that this coding can be transmitted wirelessly together with the information signal between the safety switch and the display device.

4. The safety switch system according to any one of the preceding claims 2 or 3, wherein the safety switch and the display device each have an NFC transmission/receiving unit.

5. The safety switch system according to any one of the preceding claims 2 to 4, wherein the safety switch is equipped to update the information signal in predetermined intervals that can be transmitted between the safety switch and the display device.

6. The safety switch system according to claim 5, wherein the display device is equipped to compare an information signal updated at a first point in time with an information signal updated at a subsequent second point in time and to display the result of this comparison.

7. The safety switch system according to any one of the preceding claims 2 to 6, wherein the safety switch is coupled to a safety-oriented response device for deployment of a safety-oriented response and/or is designed to generate a release signal for inducing release of a safety-critical process in response to the first and/or second condition(s).

## Revendications

1. Procédé de signalisation de la position d'un dispositif de sécurité (110) par rapport à une zone de sécurité (130a, 130b) à surveiller en ce qui concerne le dispositif de sécurité (110), **caractérisé en ce que**
pour la surveillance de la zone de sécurité (130a, 130b), la position du dispositif de sécurité par rapport à la zone de sécurité est détectée avec un dispositif de détection (120) et la zone de sécurité est divisée en une première zone partielle (130a), à l'intérieur de laquelle le dispositif de sécurité (110) se trouve à une distance et à un décalage minimal du dispositif de détection (120), et au moins une deuxième zone partielle (130b), au niveau de laquelle le dispositif de sécurité (110) se trouve à une distance et/ou un décalage plus grand mais pouvant encore être considéré comme admissible par rapport au dispositif de détection (120), ainsi que
- en réponse à une position détectée du dispositif de sécurité (110) à l'intérieur de la première zone partielle (130a), cela est reconnu comme premier état non critique en termes de sécurité, en réponse à la détection du dispositif de sécurité (110) au niveau d'une deuxième zone partielle (130b), cela est reconnu comme un état pouvant être considéré comme deuxième état non critique en termes de sécurité, et il est reconnu comme troisième état critique en termes de sécurité lorsque le dispositif de sécurité (110) n'est détecté ni à l'intérieur de la première zone partielle (130a) ni au niveau d'au moins la deuxième zone partielle (130b) et
**en ce que** la reconnaissance du troisième état est signalée par un signal de déclenchement (127a) orienté sécurité pour le déclenchement d'une réaction orientée sécurité prédéterminée et/ou
la reconnaissance du premier et/ou du deuxième état est signalée par un signal d'information (128) avec les données concernant l'état respectif à un dispositif d'affichage, plus particulièrement par une liaison sans fil.

2. Système de commutation de sécurité avec un commutateur de sécurité (100), qui comprend un dispositif de sécurité (110) et un dispositif de détection (120), plus particulièrement pour l'exécution du procédé selon la revendication 1,
- dans lequel le dispositif de détection (120) est conçu pour détecter la position du dispositif de sécurité (110) à l'intérieur d'une zone de sécurité divisée en une première zone partielle (130a), à l'intérieur de laquelle le dispositif de sécurité (110) se trouve à une distance et un décalage minimal par rapport au dispositif de détection (120), et au moins une deuxième zone partielle (130b), au niveau de laquelle le dispositif de sécurité (110) se trouve à une distance et/ou un décalage plus grand mais pouvant encore être considéré comme admissible par rapport au dispositif de détection (120) et
- dans lequel le commutateur de sécurité (100) est conçu pour reconnaître, en fonction de la position du dispositif de sécurité (110) par rapport à la zone de sécurité, au moins trois états, où, en réponse à la détection de la position du dispositif de sécurité à l'intérieur de la première zone partielle (130a), cela est reconnu comme un premier état non critique en termes de sécurité, en réponse à la détection de la position du dispositif de sécurité (130b) au niveau de la deuxième zone partielle (130b), cela peut être reconnu comme un deuxième état pouvant être reconnu comme non critique en termes de sécurité, et il peut être reconnu comme troisième état critique en termes de sécurité lorsque le dispositif de sécurité (110) n'est détecté ni à l'intérieur de la première ni au niveau de la deuxième zone partielle (130a, 130b) et où
la reconnaissance du troisième état peut être signalée par un signal de déclenchement (127a) orienté sécurité pour le déclenchement d'une réaction orientée sécurité prédéterminée et/ou
la reconnaissance du premier et/ou du deuxième état peut être signalée par un signal d'information (128) avec les données concernant l'état respectif, à un dispositif d'affichage plus particulièrement par une liaison sans fil.

3. Système de commutation de sécurité selon la revendication 2, dans lequel le commutateur de sécurité (100) comprend un codage et est conçu de façon à ce que ce codage puisse être transmis sans fil conjointement avec le signal d'information entre le commutateur de sécurité et le dispositif d'affichage.

4. Système de commutation de sécurité selon l'une des revendications précédentes 2 ou 3, dans lequel le commutateur de sécurité et le dispositif d'affichage comprennent chacun une unité d'émission/réception NFC.

5. Système de commutation de sécurité selon l'une des revendications précédentes 2 à 4, dans lequel le commutateur de sécurité est conçu pour actualiser le signal d'information pouvant être transmis entre le commutateur de sécurité et le dispositif d'affichage à des intervalles prédéterminés.

6. Système de commutation de sécurité selon la revendication 5, dans lequel le dispositif d'affichage est conçu pour comparer un signal d'information actualisé à un premier moment avec un signal d'information actualisé à un deuxième moment suivant et pour afficher un résultat de cette comparaison.

7. Système de commutation de sécurité selon l'une des revendications précédentes 2 à 6, dans lequel le commutateur de sécurité est couplé, pour le déclenchement d'une réaction orientée sécurité, avec un dispositif de réaction orienté sécurité et/ou est conçu pour provoquer une validation d'un processus critique en termes de sécurité et/ou pour générer, en réponse au premier et/ou au deuxième état, au moins un signal de validation.
